# EUROPEAN PATENT SPECIFICATION

(11) **EP 0 559 460 B1**
(45) Date of publication and mention of the grant of the patent: **26.04.2000**
(21) Application number: 93301629.7
(22) Date of filing: 04.03.1993
(51) Int. Cl.: C08L 95/00

(54) **Polymer-modified, functionalized asphalt compositions and methods of preparation**
Mit Kunststoff modifizierter, funktionalisierter Asphalt und Methoden zu seiner Herstellung
Asphalte fonctionalisé, modifié avec un polymère et procédé de préparation

(30) Priority: 05.03.1992 US 846365
(43) Date of publication of application: 08.09.1993
(73) Proprietor: EXXON RESEARCH AND ENGINEERING COMPANY, Florham Park, New Jersey 07932-0390 (US)
(72) Inventor: Gorbaty, Martin Leo, Westfield, New Jersey (US); Peiffer, Dennis George, Annandale, New Jersey (US); McHugh, Daniel James, Edison, New Jersey (US)
(74) Representative: Fletcher Watts, Susan J.

(56) References cited:
- EP-A- 0 441 285
- US-A- 4 371 641
- US-A- 4 741 868

## Description

The present invention relates to storage stable asphaltic compositions having improved viscoelastic properties and viscosities that are suitable for use as a binder in dense graded and open graded asphalt pavement and the process of making such asphaltic compositions.

Asphalt is a bituminous material remaining after or prepared from the distillation of crude oil. Typically, asphalt is derived from the bottoms of a vacuum distillation tower and has an atmospheric equivalent boiling point of generally at least 350°C. Because it is hydrophobic and has good adhesive and weathering characteristics, asphalt can be used as an adhesive or binder component of road paving materials. When so used, asphalt is normally mixed with aggregate (i.e., rock), typically in a ratio of about 5 wt.% asphalt to 95 wt.% aggregate.

Asphalt, however, has certain physical properties that vary widely with changes in temperature. For this reason, polymers often are added to asphalt to extend the range of its physical properties. Polymers can reduce the tendency of the asphalt to creep and rut in warm weather by enhancing its high temperature viscoelastic properties; and polymers can minimize cracking and stripping in cold weather by improving the asphalt's low temperature viscoelastic properties.

However, not all asphalts and polymers form compatible mixtures. "Storage stability" is defined as the formation of a continuous phase or two continuous phases that do not separate on standing for a specified period of time, usually 3-5 days, at a specified temperature, usually 160°C. Polymer modified asphalt's storage stability is greatly affected by the compatibility of the asphalt with the particular polymer. Incompatible and partially compatible mixtures undergo phase separation.

Various methods have been suggested for making polymer-modified asphaltic compositions that are sufficiently compatible to be acceptably storage stable and that also have the viscosities and softening points in the ranges required for a particular application. Some, for example, rely on selecting appropriate polymer and/or other additives to affect the final properties of the asphalt-polymer mixture (see, for example, U.S. Patent No. 4,600,635 for use of a bitumen-based adhesive composition comprising bitumen, oil and an ionomeric elastomer, such as sulfonated, carboxylated or phosphonated EPDM or butyl rubber, in amounts less than 15% by weight of the mixture that is neutralized by metal cations; British Patent No. 1,534,183 for addition of from 5% to 95% wt. of an ethylene/vinyl ester copolymer and bitumen partially crosslinked by means of -O-M-O-, O-B-O- or -O-CRR'-O- bridges; or U.S. 4,882,373 for acid modification of asphalt with subsequent contact with an oxygen-containing gas, and mixing with a thermoplastic elastomer, and unsaturated functional monomer.)

Others oxidize the asphalt before using it. European Patent No. 38,721 (U.S. Patent No. 4,371,641) teaches that a polymer, preferably an unsaturated elastomer, e.g., EPDM or butyl rubber, or a thermoplastic polymer and an appropriate filler can be added to airblown asphalt to make it suitable for use as a roofing material by increasing the asphalt's stability towards oxidation and decreasing its sensitivity to ultraviolet radiation.

EP-A-0 441 285 describes compositions comprising asphalt and an aqueous microemulsion of a sulfonated elastomer. The compositions are stated to be more stable than those prepared using emulsifiers. The aqueous phase may be substantially removed to form a mixture of the sulfonated elastomer and asphalt. The asphalt may be employed in sulfonated form dispersed as a microemulsion in water. The elastomer is suitably a block copolymer, which is normally hydrogenated if unsaturation is present prior to its sulfonation. The sulfonated elastomer may be employed in neutralized form.

In accordance with one aspect of the present invention, there is provided a method of making an asphaltic composition which comprises combining (a) an asphalt that is functionalized by sulfonation; (b) a polymer selected from (i) butyl rubbers, (ii) styrene-butadiene, styrene-butadiene-styrene linear and radial triblock polymers, styrene-butadiene linear diblock polymers, all being non-hydrogenated, (iii) EPDM, and mixtures thereof, wherein said polymer is sulfonated; and (c) a basic neutralizing agent, and optionally, a flux; and wherein the polymer is sulfonated in the range of from 1 to 100 meq SO₃H/100 g polymer, and wherein the polymer (and also the flux, if present) is (are) present in an amount by weight percent of the total composition that is sufficient to form a storage stable composition having a viscosity in the range of 0.15 to 8.0 Pas (150-8000 cPs) measured at 135°C.

In accordance with another aspect, the invention provides an asphaltic composition comprising a base-neutralized mixture of
(a) a sulfonate-functionalized asphalt, (b) a sulfonated polymer with 1 to 100 meq SO₃H/100 g polymer and, optionally, (c) a flux; the polymer being selected from (i) butyl rubbers, (ii) styrene-butadiene, styrene-butadiene-styrene linear and radial triblock polymers, styrene-butadiene linear diblock polymers, all being non-hydrogenated, (iii) EPDM, and mixtures thereof, and wherein the polymer (and flux, if present) is (are) present in an amount by weight percent of the total composition that is sufficient to form a storage stable composition having a viscosity in the range of 0.15 to 8.0 Pas (150-8000 cPs measured at 135°C.

The asphaltic compositions of the present invention demonstrate improved phase compatibility between sulfonated asphalt and sulfonated polymer and greater storage stability. The asphaltic compositions have utility as asphalt binders in dense-graded and open-graded road paving applications, particularly as a hot-mix pavement binder. Softening points in the range of greater than about 55°C to about 65°C are preferred for a binder for dense-graded pavement, and from about 60°C to about 75°C are preferred for a binder for open-graded pavement application.

The styrene-butadiene copolymers are non-hydrogenated, being styrene-butadiene, diblock ("SB") and styrene-butadiene-styrene linear and radial triblock ("SBS") polymer (hereinafter collectively and severally "styrene-butadiene"). As used herein "EPDM" means terpolymers containing ethylene and propylene units in the polymer backbone and a diene-containing monomer with the diene moiety usually in the pendant position to the chain backbone; the term "EPDM" is further defined in ASTM D-1418-64.

The materials used herein are available from commercial sources. The asphalts used in the present invention may be obtained from a variety of sources of vacuum residua and may be classified by their penetration grade (measured according to Standard Specification ASTM D-5). Typically, the asphalt will have a nominal atmospheric boiling point of at least 350°C and more typically above 440°C. In the process of the present invention, the asphalt is functionalized to contain sulfonic acid or sulfonate groups. It is preferred that oleum or sulfuric acid be used as the sulfonating agent by adding it in stoichiometric amounts slowly in small quantities to the asphalt. Such processes are well known to those skilled in the art. See, for example, U.S. Patent Nos. 3,028,333, 3,089,842 and 4,741,868 and the references therein.

The above mentioned polymers may be sulfonated by means such as dissolution in a nonreactive solvent, followed by addition of a sulfonating agent at temperatures normally from -100°C to +100°C. The sulfonating agents may be any suitable sulfonating agents, such as those detailed in U.S. Patent Nos. 3,642,728 and 3,836,511 and are known to one ordinarily skilled in the art. The sulfonated polymers prepared according to the foregoing procedures contain typically from 1-100 meq - SO₃H per 100 g polymer, preferably from about 3-60 meq/100g polymer. The desired range of sulfonation depends on the final properties desired in the asphaltic composition. Sulfonation of the polymer may be accomplished prior to combining with the asphalt for any of the polymers herein, and may be performed by any means known to one skilled in the art. For example, sulfonation may be accomplished using sulfuric acid, oleum, or, more preferably, acetyl sulfate. See, e.g., Organic Synthesis, Collective Vol. 2, p. 482, John Wiley & Co., A. H. Blatt, ed. (1966). However, in the process of the present invention, certain asphaltic compositions also may be prepared by direct sulfonation (i.e., cosulfonation) of the unsulfonated mixture of asphalt and polymer followed by neutralization of the mixture as described herein. This procedure is preferred when the polymer is styrene-butadiene-styrene triblock and styrene butadiene diblock copolymers.

The asphalt that contains sulfonate or sulfonic acid groups and the sulfonated polymer may be combined to produce a mixture using any number of methods known to one skilled in the art. These can include, for example, dissolution with stirring in a suitable solvent such as dichloroethane for the asphalt, and toluene for the sulfonated polymer; or by heating the asphalt to about 140°C to 170°C, preferably 160°C and thereafter adding the sulfonated polymer in situ in portions with stirring, mixing or agitation, using a high shear mixing device. The method used will influence the amount of time needed to combine the asphalt and polymer but in any event should be sufficient to distribute the sulfonated polymer throughout the asphalt. Times may range from 0.5 to 24 hours, according to the method selected.

The basic neutralizing agent will preferably contain cations having a valence from +1 to +3, especially +1 and +2, and may be selected from the group consisting of ammonia, amines and bases that contain cations selected from Groups IA, IIA, IIIA and Group IIB of the Periodic Table and mixtures thereof. A preferred basic neutralizing agent is one that contains one or more monovalent or divalent, preferably divalent cations, more preferably Zn+⁺², Ca⁺², Ba⁺², Mg⁺² and mixtures thereof, most preferably Zn⁺² and Ca⁺². Suitable compounds containing such cations are, for example, zinc acetate, zinc oxide or calcium oxide, more preferably calcium oxide. The neutralizing agent may be contained in a suitable solvent such as water/methanol. The agent also may be added in situ, for example in powdered or other undissolved form; that is, directly to heated asphalt or to the sulfonated asphalt-sulfonated polymer mixture. In situ addition is preferred. The polymer and asphalt each must have been sulfonated before neutralization. The order of neutralization of the sulfo-asphalt and sulfo-polymer is not important. Within the scope of this invention, asphalts and polymer may be sulfonated and neutralized separately and then combined, or the polymer may be sulfonated and neutralized then added to a sulfonated asphalt and the mixture neutralized, or in the case of styrene-butadiene copolymers, the blend of asphalt and polymer may be treated with sulfonating agent and the mixture neutralized. Sufficient neutralizing agent must be added to neutralize the sulfonated asphalt and sulfonated polymer. Generally, this will require a stoichiometric amount of basic neutralizing agent, or more preferably a slight excess.

The weight percent of sulfonated polymer in the total asphaltic composition is selected based on the desired physical properties of the resulting asphaltic composition and may be any suitable amount greater than zero. However, for EPDM and butyl rubbers the amount is greater than zero wt.%, preferably from about 1 to about 4 wt.%, more preferably 2-3 wt.% and for styrene butadiene greater than zero to about 7 wt.%, preferably from 2 to 7 wt%, more especially about 3-5 wt.%. The upper limit is often constrained by the cost of the polymer added, as well as by physical properties of the product.

In the present invention, softening point was used as a measure of compatibility. Thus, if the top third and the bottom third of the sample showed softening points within a 4°C variation the asphalt and polymer were judged to be compatible. However, the softening point data were supplemented by optical micrographs taken of the top and bottom segments of the asphaltic compositions in order to verify phase compatibility.

It is possible to adjust the softening point and viscosity of the asphaltic composition by varying the amount of sulfonation of the asphalt and/or amount of sulfonated polymer in the composition. The physical properties of the resulting composition will vary accordingly. The asphaltic compositions of the present invention also will possess reinforcing characteristics due to the presence of the polymer that are not seen in the asphalt alone. In addition, if necessary in order to bring the viscosity of the mixture into the range acceptable for the particular application, flux (i.e., original asphalt) may be added to the asphaltic composition. The amount of flux to be added will depend on the viscosity of the starting materials and the desired viscosity of the end product and the particular application is readily determinable by one routinely skilled in the art in view of the teachings herein.

It has been found that, as compared with asphalt alone, the functionalized asphaltic compositions of the present invention have improved viscoelastic properties, softening point, and storage stability.

The invention is illustrated by the following examples, which are not intended to limit the scope of the invention.

### Example 1

The data below are meant to demonstrate that both polymer and asphalt must be sulfonated in order to obtain acceptable storage stability. The following blends were prepared, all at 4 wt.% polymer from the same base bitumen: (a) bitumen and EPDM, (b) bitumen and Zn-Sulfo-EPDM, (c) EPDM and bitumen sulfonated to 13 meq/100g, and (d) Zn-Sulfo-EPDM and bitumen sulfonated to 13 meq/100g. The softening points of the top and bottom fractions after 4 days at 160°C were: (a) 66.7°C and 57.8°C (152°F and 136°F); (b) 73.9°C and 55.0°C (165°F and 131°F); (c) 71.1°C and 61.1°C (160°F and 142°F); and (d) 62.2°C and 60.0°C (144°F and 140°F). Only sample (d) was judged to be storage stable based on softening point data. This storage stability was confirmed by optical microscopy, which showed that only sample (d) had similar top and bottom phases; the other samples showed that polymer had concentrated in the top phase.

### Example 2

A typical synthesis for the functionalization (sulfonation) of asphalt and its subsequent blending with polymer is given as follows:

357.4 g. bitumen were placed in a resin flask and heated to 150°C. 5.0 ml. of oleum (15 wt.% SO₃ in sulfuric acid) were added as a sulfonating agent, slowly drop by drop, with stirring. Temperature rose 2-5°C using oleum. The mixture is stirred for 45 minutes using a paddle blade and an air-driven motor. 7.15 g. of Zn-sulfonated EPDM were added in small pieces over a 5 minute period and stirring was continued for 45 minutes. 7.65 g. of ZnO neutralizing agent were added and stirred for 45 minutes. The product was poured hot (150°C) into a storage container.

### Tables

The following Tables 1 and 2 show data on the asphalt alone; neutralized functionalized (sulfonated) asphalt-sulfonated polymer(s) and targets at various weight percents of asphalt and polymer, including modification in counterion structure of the basic neutralizing agent. For use as a binder in road paving materials, the asphaltic composition of the present invention should have a viscosity of 0.15 to 2.0 Pa.s (150-2000 cP) measured at 135°C and softening points of from 51.7 to 62.8°C (125 to 145°F) for dense graded binders, and viscosities of from 3.0 to 8.0 Pa.s (3000-8000 cP), measured at 135°C and softening points greater than 60°C (140°F) for open graded formulations.

All blends were determined to be storage stable after standing for 4 days at 160°C. Softening points were measured initially and after standing for 4 days. The procedure is based on ASTM Test D36. Viscosities of the initially prepared mixtures are shown in Tables 1 and 2.

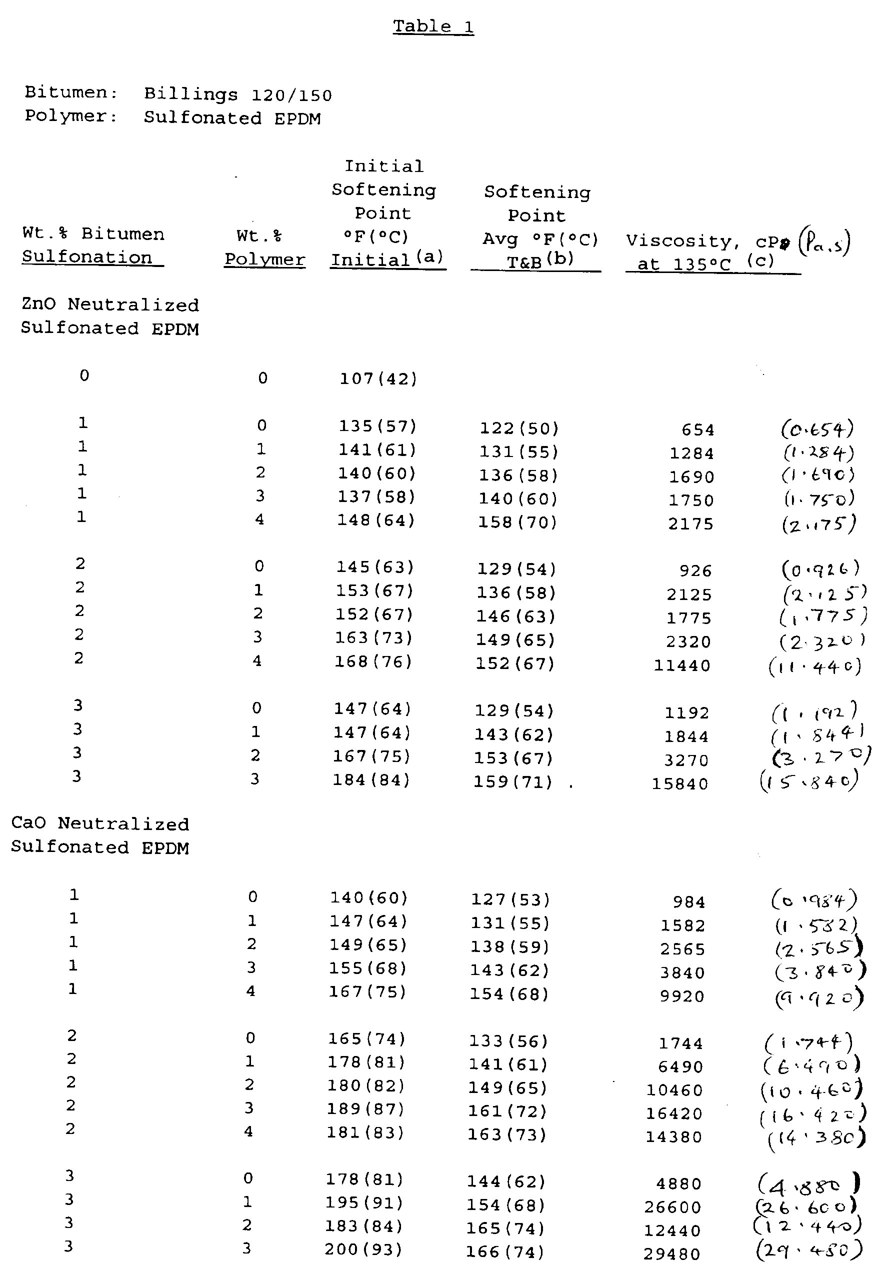

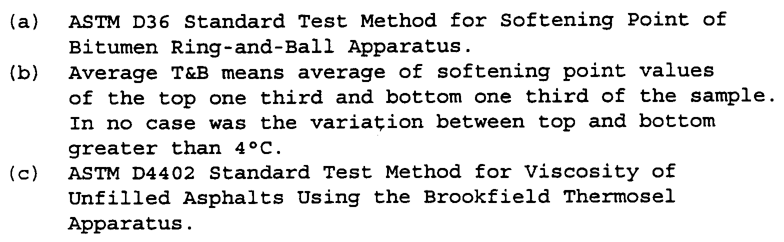

**Table 2**

| | | | | | |
|---|---|---|---|---|---|
| Bitumen: Billings 120/150 Polymer: Zn-Sulfonated-EPDM Bitumen Sulfonation Level: 2 wt% (26 meq/100 g)^{(a)} | | | | | |

| Neutralizing Agent | Wt.% Polymer | Softening Point °F(°C) Initial^{(b)} | Softening Point Avg. T&B°F(°C)^{(c)} | Viscosity, cP at 135°C^{(d)} | (Pa.s) |
|---|---|---|---|---|---|
| | | | | | |

| ZnO | | | | | |
|---|---|---|---|---|---|
| None | 0 | 107(42) | | | |
| Conc. H₂SO₄ | 0 | 138(59) | 133(56) | 992 | (0.992) |
| | 0 | 141(61) | 133(56) | 1442 | (1.442) |
| | 2 | 143(62) | 149(65) | 1804 | (1.804) |
| | 2 | 163(73) | 146(63) | 4385 | (4.385) |
| | 2 | 165(74) | 145(63) | 3260 (Na-Sulfonated-EPDM)^{(e)} | (3.260) |
| 50% H₂SO₄ | 1 | 153(67) | 136(58) | 2125 | (2.125) |
| | 2 | 152(67) | 146(63) | 1775 | (1.775) |
| | 2 | 168(76) | 146(63) | 5690 | (5.690) |
| | 3 | 163(73) | 149(65) | 2320 | (2.320) |
| | 4 | 168(76) | 152(67) | 11440 | (11.440) |
| Oleum | 2 | 156(69) | 153(67) | 4370 | (4.370) |

| CaO | | | | | |
|---|---|---|---|---|---|
| 50% H₂SO₄ | 0 | 165(74) | 133(56) | 1744 | (1.744) |
| | 1 | 178(81) | 140(60) | 6490 | (6.490) |
| | 2 | 180(82) | 149(65) | 10460 | (10.460) |
| | 3 | 189(87) | 161(72) | 16420 | (16.420) |
| | 4 | 181(83) | 163(73) | 14380 | (14.380) |
| | 4 | 182(83) | 164(73) | 21000 | (21.000) |
| Conc. H₂SO₄ | 2 | 178(81) | 147(64) | 8090 (Na-Sulfonated-EPDM)^{(e)} | (8.090) |

| | | | | | |
|---|---|---|---|---|---|
| (a) Sulfonating agent(s) shown in the table below the applicable neutralizing agent. | | | | | |
| (b) ASTM D36 Standard Test Method for Softening Point of Bitumen Ring-and-Ball Apparatus. | | | | | |
| (c) Average T&B means average of softening point values of top one third and bottom one third samples. Variation between T&B was less than 4°C. | | | | | |
| (d) ASTM D4402 Standard Test Method for Viscosity of Unfilled Asphalts Using the Brookfield Thermosel Apparatus. | | | | | |
| (e) Na-Sulfonated EPDM used instead of Zn-Sulfonated EPDM. Data show that different counterions may be used to neutralize the polymer and produce a blend having acceptable viscosity. | | | | | |

### Example 3

This example is meant to illustrate that the same asphaltic composition may be obtained by direct sulfonation and neutralization of a polymer-asphalt mixture as by the procedure of Example 1.
(a) A Baytown AC-5 bitumen (372.1g) was placed in a resin flask and heated to 160°C, and 11.2g of a styrene-butadiene-styrene radial triblock copolymer was added with stirring. The mixture was blended using a high shear mixer for 60 minutes. To this blend, 5.2 ml of oleum was added in a dropwise manner. After stirring for 1 hour, 2.75g of calcium oxide was added to the mixture and stirring continued for an additional hour.
(b) In another resin flask, 413.4g of the same AC-5 bitumen was heated to 160°C, and 5.8 ml of oleum was added in a dropwise manner. After stirring for 45 minutes, 12.4g of a Zn-sulfonated styrene-butadiene-styrene radial triblock copolymer was added with stirring. After 45 minutes, 3.1g of calcium oxide was added and the mixture stirred with a high shear stirrer for 2 hours.

The asphaltic composition from procedure (a) had a viscosity of 2.690 Pa.s (2690 cP) at 275°F (135°C), and after 4 days at 160°C the softening points of the top and bottom samples were each 145°F (62.7°C) indicating excellent storage stability. The product from procedure (b) had a viscosity of 2.535 Pa.s (2535 cP) at 275°F (135°C) and after 4 days at 160°C, the softening points of the top and bottom samples were 146°F (63.3°C) and 144°F (62.2°C), respectively.

### Example 4

Asphalt (AC-5) was combined with polymer sulfonated and neutralized using CaO.

The table shows softening point and viscosity data for zero wt.% and 3 wt.% polymers. The letter "C" appearing in the column labeled "Sulfonation Level (wt.%)" indicates that the asphalt and polymer were co-sulfonated then neutralized as in example 3a. All others were separately sulfonated.

The following table shows that an asphaltic composition of the present invention may be made by producing a neutral blend of styrene butadiene styrene radial triblock in an amount equal to 3 wt.% of total composition and asphalt, that has viscoelastic properties that fall within the targets for a binder in open graded asphalt (3.0 to 8.0 Pa.s) (3000-8000 cPs) pavement, and that by addition of an appropriate amount of flux the viscoelastic properties may be adjusted to produce an asphaltic composition that falls within the targets (0.150 to 2.0 Pa.s) (150-2000 cPs) for a binder in dense graded asphalt pavement. Softening points were measured initially and after four days for the top third ("T") and bottom third ("B") of the samples. Sample B was prepared by the method described in Example 3a. Sample D was prepared by the method described in Example 3b.

**Table 3**

| | | | | | | |
|---|---|---|---|---|---|---|
| Asphalt: Bayonne AC-5 Neutralizing Agent: CaO | | | | | | |

| Sample | Polymer (wt.%) | Sulfonation Level (wt.%) | Initial Softening Pt. °F (°C) | Viscosity at 135°C (cP) Pa.s | Softening Pt. (°F) °C | |
|---|---|---|---|---|---|---|
| | | | | | T | B |
| (A) | 0 | 0 | 104 (40) | (245) 0.295 | - | - |
| (B) | 3 | 2C | 166 (74) | (6690) 6.690 | (165) 73.9 | (163) 72.8 |
| (C) | 1.95^{a} | * | 141 (61) | (1628) 1.628 | (137) 58.3 | (131) 55.0 |
| (D) | 3 | 2 | 185 (85) | (13240) 13.240 | (171) 77.2 | (172) 77.8 |
| (E) | 2.25^{a} | * | 164 (73) | (4490) 4.490 | (161) 71.7 | (158) 70.0 |
| (F) | 1.50^{a} | * | 134 (57) | (1192) 1.192 | (137) 58.3 | (137) 58.3 |

| | | | | | | |
|---|---|---|---|---|---|---|
| a = calculated | | | | | | |
| Legend Sample (A) Starting asphalt (AC-5) (B) Sample (A) + 3 wt.% SBS radial triblock; prepared by method of Example 3a (C) Sample (B) + 35 wt.% flux (D) Sample (A) + 3 wt.% SBS radial triblock copolymer prepared by method of Example 3b (E) Sample (D) + 25 wt.% flux (F) Sample (D) + 50 wt.% flux Samples (B) through (F) formed compatible blends. Although the viscosity of Sample (D) was high, it was suitable for use as a starting material for reblending to produce a dense graded or open graded binder. | | | | | | |
| * No additional sulfonation performed on the asphalt-polymer mixture. | | | | | | |

## Claims

1. A method of making an asphaltic composition which comprises combining (a) an asphalt that is functionalized by sulfonation; (b) a polymer selected from (i) butyl rubbers, (ii) styrene-butadiene, styrene-butadiene-styrene linear and radial triblock polymers, styrene-butadiene linear diblock polymers, all being non-hydrogenated, (iii) EPDM, and mixtures thereof, wherein said polymer is sulfonated; and (c) a basic neutralizing agent, and optionally, a flux; and wherein the polymer is sulfonated in the range of from 1 to 100 meq SO₃H/100 g polymer, and wherein the polymer (and also the flux, if present) is (are) present in an amount by weight percent of the total composition that is sufficient to form a storage stable composition having a viscosity in the range of 0.15 to 8.0 Pas (150-8000 cPs) measured at 135°C.

2. The method of claim 1 wherein the asphalt and polymer are each sulfonated and neutralized separately, then combined.

3. The method of claim 1 wherein the polymer is sulfonated and neutralized, the asphalt is sulfonated, the polymer and asphalt are combined, then the mixture is neutralized.

4. The method of claim 1 wherein the polymer is blended with the asphalt, and the blend is sulfonated then neutralized.

5. The method of any one of claims 1 to 4 wherein the polymer is EPDM and the weight percent of EPDM in the total composition is from greater than zero to 4%.

6. The method of any one of claims 1 to 4 wherein the polymer is selected from butyl rubbers and styrene-butadiene and wherein the weight percent of polymer is from greater than zero to 7 wt.%.

7. The method of any one of claims 1 to 6 wherein the basic neutralizing agent contains cations having a valence of from +1 to +3.

8. The method of claim 7 wherein the basic neutralizing agent is selected from ammonia, amines and bases that contain cations selected from Group IA, IIA, IIIA, and Group IIB of the periodic table and mixtures thereof.

9. The method of claim 8 wherein the basic neutralizing agent is selected from zinc oxide or calcium oxide.

10. The method of any one of claims 1 to 9 wherein the sulfonated asphalt, sulfonated polymer and basic neutralizing agent are combined *in situ* at a temperature above about 140°C.

11. The method of any one of claims 1 to 10 wherein the basic neutralizing agent is present in excess of that required to neutralize the sulfonated polymer sulfonated asphalt blend.

12. The method of any preceding claim, wherein the storage stable composition has a viscosity in the range from 0.15 to 2.0 Pa.s (150 to 2000 cP) or from 3.0 to 8.0 Pa.s (3000 to 8000 cP) measured at 135°C.

13. An asphaltic composition comprising a base-neutralized mixture of
(a) a sulfonate-functionalized asphalt, (b) a sulfonated polymer with 1 to 100 meq SO₃H/100 g polymer and, optionally, (c) a flux; the polymer being selected from (i) butyl rubbers, (ii) styrene-butadiene, styrene-butadiene-styrene linear and radial triblock polymers, styrene-butadiene linear diblock polymers, all being non-hydrogenated, (iii) EPDM, and mixtures thereof, and wherein the polymer (and flux, if present) is (are) present in an amount by weight percent of the total composition that is sufficient to form a storage stable composition having a viscosity in the range of 0.15 to 8.0 Pas (150-8000 cPs) measured at 135°C.

14. A composition as claimed in claim 14, having a viscosity in the range from 0.15 to 2.0 Pa.s (150 to 2000 cP) or from 3.0 to 8.0 Pa.s (3000 to 8000 cP) measured at 135°C.

15. A composition as claimed in claim 13 or claim 14, having the features defined in any of claims 5 to 10.

16. The use of the asphaltic composition claimed in claim 13, 14 or 15, or made by the method of any one of claims 1 to 12, as a hot-mix road-paving binder.

## Patentansprüche

1. Verfahren zur Herstellung einer Asphaltzusammensetzung, bei dem (a) durch Sulfonierung funktionalisierter Asphalt, (b) Polymer ausgewählt aus (i) Butylkautschuken, (ii) Styrol/Butadien, linearen und radialen Styrol/Butadien/Styrol-Triblockpolymeren, linearen Styrol/Butadien-Diblockpolymeren, die alle nicht hydriert sind, (iii) EPDM und Mischungen derselben, wobei das Polymer sulfoniert ist bzw. wird, und (c) basisches Neutralisationsmittel und gegebenenfalls Flußmittel kombiniert werden, wobei das Polymer im Bereich von 1 bis 100 meq SO₃H/100 g Polymer sulfoniert ist bzw. wird und wobei das Polymer (und auch das Flußmittel, falls vorhanden) in einer Menge vorhanden ist (sind), bezogen auf das Gewicht der gesamten Zusammensetzung, die ausreichend ist, um eine lagerstabile Zusammensetzung mit einer Viskosität im Bereich von 0,15 bis 8,0 Pas (150 bis 8000 cPs), gemessen bei 135 °C, zu bilden.

2. Verfahren nach Anspruch 1, bei dem der Asphalt und das Polymer jeweils getrennt sulfoniert und neutralisiert werden und dann kombiniert werden.

3. Verfahren nach Anspruch 1, bei dem das Polymer sulfoniert und neutralisiert wird, der Asphalt sulfoniert wird, das Polymer und der Asphalt kombiniert werden und dann die Mischung neutralisiert wird.

4. Verfahren nach Anspruch 1, bei dem das Polymer mit dem Asphalt Vermischt wird und das Gemisch sulfoniert und dann neutralisiert wird.

5. Verfahren nach einem der Ansprüche 1 bis 4, bei dem das Polymer EPDM ist und der Gewichtsprozentsatz an EPDM in der gesamten Zusammensetzung von größer als 0 bis 4 Gew.-% beträgt.

6. Verfahren nach einem der Ansprüche 1 bis 4, bei dem das Polymer ausgewählt ist aus Butylkautschuken und Styrol/Butadien und bei dem der Gewichtsprozentsatz des Polymers von größer als 0 bis 7 Gew.-% beträgt.

7. Verfahren nach einem der Ansprüche 1 bis 6, bei dem das basische Neutralisationsmittel Kationen mit einer Wertigkeit von +1 bis +3 enthält.

8. Verfahren nach Anspruch 7, bei dem das basische Neutralisationsmittel ausgewählt ist aus Ammoniak, Aminen und Basen, die Kationen enthalten, die aus Gruppe IA, IIA, IIIA und Gruppe IIB des Periodensystems der Elemente und Mischungen derselben ausgewählt sind.

9. Verfahren nach Anspruch 8, bei dem das basische Neutralisationsmittel ausgewählt ist aus Zinkoxid oder Calciumoxid.

10. Verfahren nach einem der Ansprüche 1 bis 9, bei dem der sulfonierte Asphalt, das sulfonierte Polymer und das basische Neutralisationsmittel *in situ* bei einer Temperatur über etwa 140 °C kombiniert werden.

11. Verfahren nach einem der Ansprüche 1 bis 10, bei dem das basische Neutralisationsmittel im Überschuß zu dem vorhanden ist, das zur Neutralisation des Gemisches aus sulfoniertem Polymer und sulfoniertem Asphalt erforderlich ist.

12. Verfahren nach einem der vorhergehenden Ansprüche, bei dem die lagerstabile Zusammensetzung eine Viskosität im Bereich von 0,15 bis 2,0 Pas (150 bis 2000 cP) oder 3,0 bis 8,0 Pas (3000 bis 8000 cP), gemessen bei 135 °C, aufweist.

13. Asphaltzusammensetzung, die eine basenneutralisierte Mischung aus
(a) sulfonat-funktionalisiertem Asphalt, (b) sulfoniertem Polymer mit 1 bis 100 meq SO₃H/100 g Polymer und gegebenenfalls (c) Flußmittel umfaßt, wobei das Polymer ausgewählt ist aus (i) Butylkautschuken, (ii) Styrol/Butadien, linearen und radialen Styrol/Butadien/Styrol-Triblockpolymeren, linearen Styrol/Butadien-Diblockpolymeren, die alle nicht hydriert sind, (iii) EPDM und Mischungen derselben und wobei das Polymer (und das Flußmittel, falls vorhanden) in einer Menge vorhanden ist (sind), bezogen auf das Gewicht der gesamten Zusammensetzung, die ausreichend ist, um eine lagerstabile Zusammensetzung mit einer Viskosität im Bereich von 0,15 bis 8,0 Pas (150 bis 8000 cP), gemessen bei 135 °C, zu bilden.

14. Zusammensetzung nach Anspruch 14, bei der die Viskosität im Bereich von 0,15 bis 2,0 Pas (150 bis 2000 cP) oder 3,0 bis 8,0 Pas (3000 bis 8000 cP), gemessen bei 135 °C, liegt.

15. Zusammensetzung nach Anspruch 13 oder Anspruch 14, die die Merkmale gemäß einem der Ansprüche 5 bis 10 aufweist.

16. Verwendung der Asphaltzusammensetzung gemäß den Ansprüchen 13, 14 oder 15 oder hergestellt nach dem Verfahren gemäß einem der Ansprüche 1 bis 12 als Heißmisch-Straßenbelagsbindemittel.

## Revendications

1. Procédé de fabrication d'une composition asphaltique, qui comprend la combinaison (a) d'un asphalte qui est fonctionnalisé par sulfonation, (b) d'un polymère choisi parmi (i) des caoutchoucs de butyle, (ii) des polymères de styrène-butadiène et des polymères à triple séquence styrène-butadiène-styrène linéaire et radiale, des polymères à double séquence styrène-butadiène linéaire, tous étant non hydrogénés, (iii) de l'EPDM, et leurs mélanges, dans lequel ledit polymère est sulfoné, et (c) d'un agent de neutralisation basique et, en variante, d'un flux, et dans lequel le polymère est sulfoné dans la plage de 1 à 100 méq. de SO₃H/100 g de polymère, et dans lequel le polymère (et également le flux s'il est présent) est (sont) présent(s) en quantité, en pourcentage en poids de la composition totale, suffisante pour former une composition stable au stockage ayant une viscosité dans la plage de 0,15 à 8,0 Pa.s (150-8000 cP) mesurée à 135°C.

2. Procédé selon la revendication 1, dans lequel l'asphalte et le polymère sont chacun sulfonés et neutralisés séparément, puis combinés.

3. Procédé selon la revendication 1, dans lequel le polymère est sulfoné et neutralisé, l'asphalte est sulfoné, le polymère et l'asphalte sont combinés, puis le mélange est neutralisé.

4. Procédé selon la revendication 1, dans lequel le polymère est mélangé à l'asphalte et le mélange est sulfoné, puis neutralisé.

5. Procédé selon l'une quelconque des revendications 1 à 4, dans lequel le polymère est l'EPDM et le pourcentage en poids d'EPDM dans la composition totale a une valeur supérieure à zéro % et allant jusqu'à 4 %.

6. Procédé selon l'une quelconque des revendications 1 à 4, dans lequel le polymère est choisi parmi les caoutchoucs de butyle et le styrène-butadiène et dans lequel le pourcentage en poids de polymère a une valeur supérieure à zéro % et allant jusqu'à 7% en poids.

7. Procédé selon l'une quelconque des revendications 1 à 6, dans lequel l'agent de neutralisation basique contient des cations ayant une valence de +1 à +3.

8. Procédé selon la revendication 7, dans lequel l'agent de neutralisation basique est choisi parmi l'ammoniac, les amines et les bases qui contiennent des cations choisis dans les groupes IA, IIA, IIIA et IIB du tableau périodique, et leurs mélanges.

9. Procédé selon la revendication 8, dans lequel l'agent de neutralisation basique est choisi parmi l'oxyde de zinc ou l'oxyde de calcium.

10. Procédé selon l'une quelconque des revendications 1 à 9, dans lequel l'asphalte sulfoné, le polymère sulfoné et l'agent de neutralisation basique sont combinés *in situ* à une température supérieure à environ 140°C.

11. Procédé selon l'une quelconque des revendications 1 à 10, dans lequel l'agent de neutralisation basique est présent en excès de la quantité requise pour neutraliser le mélange de polymère sulfoné et d'asphalte sulfoné.

12. Procédé selon l'une quelconque des revendications précédentes, dans lequel la composition stable au stockage a une viscosité dans la plage de 0,15 à 2,0 Pa.s (150 à 2000 cP) ou de 3,0 à 8,0 Pa.s (3000 à 8000 cP), mesurée à 135°C.

13. Composition asphaltique comprenant un mélange, neutralisé par une base constitué (a) d'un asphalte fonctionnalisé par un sulfonate, (b) d'un polymère sulfoné avec 1 à 100 méq. de SO₃H/100 g de polymère et, en variante, (c) d'un flux, le polymère étant choisi parmi (i) des caoutchoucs de butyle, (ii) des polymères de styrène-butadiène et des polymères à triple séquence styrène-butadiène-styrène linéaire et radiale, des polymères à double séquence styrène-butadiène linéaire, tous étant non hydrogénés, (iii) de l'EPDM, et leurs mélanges, et dans lequel le polymère (et également le flux s'il est présent) est (sont) présent(s) en quantité, en pourcentage en poids de la composition totale, suffisante pour former une composition stable au stockage ayant une viscosité dans la plage de 0,15 à 8,0 Pa.s (150-8000 cP), mesurée à 135°C.

14. Composition selon la revendication 14, ayant une viscosité dans la plage de 0,15 à 2,0 Pa.s (150 à 2000 cP) ou de 3,0 à 8,0 Pa.s (3000 à 8000 cP), mesurée à 135°C.

15. Composition selon la revendication 13 ou 14, ayant les caractéristiques définies dans l'une quelconque des revendications 5 à 10.

16. Utilisation de la composition asphaltique selon la revendication 13, 14 ou 15, ou préparée par le procédé selon l'une quelconque des revendications 1 à 12, sous la forme d'un liant de revêtement de routes en mélange à chaud.
